# FASCICULE DE BREVET EUROPEEN

(11) **EP 4 522 889 B1**
(45) Date de publication et mention de la délivrance du brevet: **26.08.2026**
(21) Numéro de dépôt: 23726327.2
(22) Date de dépôt: 10.05.2023
(51) Int. Cl.: F16H 57/027, F16H 57/04

(54) **BOITE DE VITESSES LUBRIFIÉE PAR DE L'HUILE**
GETRIEBE MIT ÖLSCHMIERUNG
GEARBOX WITH OIL LUBRICATION

(30) Priorité: 13.05.2022 FR 2204553
(43) Date de publication de la demande: 19.03.2025
(73) Titulaire: Horse Powertrain Solutions, S.L.U., 28108 Alcobendas, Madrid (ES)
(72) Inventeur: GAILLARD, Fabien, 78084 Guyancourt (FR); MIRGALET, Laurent, 78084 Guyancourt (FR)
(74) Mandataire: Elzaburu S.L.P.
(86) Numéro de dépôt international: PCT/EP2023/062437
(87) Numéro de publication internationale: WO 2023/217870

(56) Documents cités:
- WO-A1-2021/048927
- CN-A- 113 719 604
- US-A1- 2008 041 179

## Description

### Domaine technique de l'invention

L'invention concerne une boîte de vitesses comprenant un bac de distribution d'huile. L'invention porte encore sur un groupe motopropulseur comprenant une telle boîte de vitesses.

L'invention porte encore sur un véhicule comprenant une telle boîte de vitesses ou un tel groupe motopropulseur.

### Etat de la technique antérieure

Un véhicule, en particulier électrique ou hybride, comprend généralement une boîte de vitesses destinée à transformer une vitesse de rotation issue du moteur électrique et/ou du moteur thermique en une vitesse de rotation adaptée pour une ou des roues motrices. Une telle boîte de vitesses est lubrifiée par de l'huile. Généralement, une telle boîte de vitesses comprend une réserve de stockage d'huile aussi appelée bâche. Généralement, une couronne, par exemple de différentiel, barbote dans la bâche ce qui projette l'huile et assure la lubrification des éléments de la boîte de vitesses.

Une telle boîte de vitesses nécessite une mise à l'air afin d'éviter des fluctuations de pressions au sein de celle-ci, en particulier des surpressions qui s'avèrent néfastes et peuvent occasionner la détérioration des lèvres des joints d'étanchéité. Une telle mise à l'air est généralement obtenue par des rainures et/ou nervures ménagées dans le ou les carters d'une telle boîte de vitesses afin de créer un conduit entre l'intérieur et l'extérieur d'une telle boîte de vitesses. Evidemment, un tel conduit est formé et/ou agencé de sorte que les projections d'huile ne l'atteignent pas, ou l'atteigne difficilement.

Or, généralement le ou les carter d'une boîte de vitesses sont obtenus par un processus de fonderie et/ou d'usinage. La création d'une telle mise à l'air engendre des moules onéreux du fait de leurs complexités de conception et/ou de fabrication, en particulier des usinages complexes.

Le document WO 2021048927 A1 présente une boîte de vitesses lubrifiée par de l'huile, la boîte de vitesses comprenant une partie haute, comprenant:- un moyen de mise à l'air au niveau de la partie haute de la boîte de vitesses,- un bac de distribution d'huile agencé en partie haute au sein de la boîte de vitesses, le bac de distribution comprenant une première chambre comprenant au moins une évacuation de distribution d'huile, la première chambre étant destinée à recevoir de l'huile et à la redistribuer en s'échappant de la première chambre par l'au moins une évacuation, une deuxième chambre destinée à communiquer avec le moyen de mise à l'air de la boîte de vitesses, le bac de distribution étant agencé de sorte que la deuxième chambre soit en vis-à-vis du moyen de mise à l'air.

Le document CN 113719604 A présente une structure de lubrification active de boîte de vitesses avec une boîte de stockage d'huile et un procédé de lubrification. La structure de lubrification active de boîte de vitesses comprend un corps de boîte, une ouverture d'aspiration d'huile de corps de boîte est formée dans la paroi latérale de la partie inférieure du corps de boîte, une pompe à huile est disposée à la position, à proximité de l'ouverture d'aspiration d'huile de corps de boîte, dans le corps de boîte, un refroidisseur est disposé à l'extérieur du corps de boîte, et une sortie d'huile de la pompe à huile est reliée à une entrée d'huile du refroidisseur; une boîte de stockage d'huile est en outre disposée sur la partie supérieure dans le corps de boîte, et une sortie d'huile du refroidisseur est reliée à une entrée d'huile de boîte à huile de la boîte de stockage d'huile par l'intermédiaire d'une première canalisation; et une sortie d'huile de boîte à huile de la boîte de stockage d'huile est reliée à un roulement et/ou un siège de roulement disposés dans le corps de boîte par l'intermédiaire d'une canalisation et/ou d'une structure de rainure. Selon la structure de lubrification active de la boîte de vitesses, en disposant la boîte de stockage d'huile, en partant du principe que l'état de lubrification des pièces dans la boîte est maintenu bon, la quantité de remplissage et la hauteur du niveau de liquide de l'huile de lubrification peuvent être efficacement réduites, de sorte que la perte de consommation d'énergie d'agitation d'huile d'un engrenage est réduite, la productivité thermique d'agitation d'huile est réduite, l'efficacité de transmission de la boîte de vitesses est améliorée et les performances globales de l'ensemble de la boîte sont améliorées.

Le document US 2008041179 A1 concerne une transmission automatique comportant une chambre de reniflard d'air pour séparer l'huile et l'air, entrant dans la chambre de reniflard d'air sous forme de bulles d'huile, une nervure de protection est située sous une ouverture de reniflard d'air servant d'orifice d'entrée et de retour, pour empêcher l'huile, stockée dans un ensemble de carter de transmission et éclaboussée par le mouvement rotatif d'une pièce de composant rotatif de transmission, d'atteindre directement l'ouverture de reniflard d'air. Une face supérieure de la nervure de blindage est configurée pour être inclinée vers le bas par rapport à une ligne horizontale de manière à être orientée vers la partie de composant rotatif de transmission, pour recevoir l'huile s'égouttant à travers l'ouverture de reniflard d'air avec la face supérieure de la nervure de blindage et pour délivrer rapidement l'huile reçue vers la partie de composant rotatif de transmission, en utilisant la face supérieure inclinée de la nervure de blindage.

Il convient de simplifier la fabrication d'un ou de carters de boîte de vitesses au niveau de la mise à l'air, en particulier afin de réduire les coûts de production.

### Présentation de l'invention

Le but de l'invention est de fournir une boîte de vitesses aux inconvénients ci-dessus. En particulier, l'invention propose une boîte de vitesses participant à la fonction de mise à l'air de la boîte de vitesses.

### Résumé de l'invention

Pour atteindre l'objectif, l'invention porte sur une boîte de vitesses lubrifiée par de l'huile avec un bac de distribution d'huile destiné à être agencé en partie haute au sein de la boîte de vitesses lubrifiée par de l'huile, le bac de distribution comprenant :
- un moyen d'injection d'huile au niveau de la partie haute de la boîte de vitesses,
- un moyen de mise à l'air au niveau de la partie haute de la boîte de vitesses,
- un bac de distribution d'huile agencé en partie haute au sein de la boîte de vitesses, le bac de distribution comprenant une première chambre comprenant au moins une évacuation de distribution d'huile, la première chambre étant destinée à recevoir de l'huile et à la redistribuer en s'échappant de la première chambre par l'au moins une évacuation, une deuxième chambre destinée à communiquer avec le moyen de mise à l'air de la boîte de vitesses,
le bac de distribution étant agencé de sorte que la première chambre soit en vis-à-vis du moyen d'injection et de sorte que la deuxième chambre soit en vis-à-vis du moyen de mise à l'air.

Le bac de distribution peut comprendre une cloison séparant un premier volume de la première chambre d'un deuxième volume de la deuxième chambre de sorte à séparer la première chambre destinée à la distribution d'huile de la deuxième chambre destinée à admettre ou à refouler de l'air.

La deuxième chambre peut comprendre un orifice d'admission d'air destiné à permettre une arrivée d'air depuis l'intérieur d'une telle boîte de vitesses vers la deuxième chambre.

La deuxième chambre peut comprendre un orifice de vidage d'huile destiné à évacuer toute huile présente dans la deuxième chambre.

Le bac de distribution d'huile peut être obtenu en matière plastique et/ou en matériau composite.

Le bac de distribution peut comprendre un moyen d'écartement, notamment une nervure, sous la première chambre et/ou sous la deuxième chambre de sorte à laisser un espace pour l'évacuation de l'huile depuis l'orifice de vidage de la deuxième chambre.

La première chambre et/ou la deuxième chambre du bac de distribution peut être intégralement ouverte vers le haut.

La boîte de vitesses peut comprendre un premier carter et un deuxième carter, les premier et deuxième carters pouvant être destinés à se fixer l'un sur l'autre ou l'un par rapport à l'autre, le bac de distribution pouvant être fixé sur le premier carter et/ou sur le deuxième carter, notamment par l'intermédiaire d'une vis et/ou d'un pion de centrage et/ou d'un pion de maintien.

La boîte de vitesses peut comprendre un premier carter et un deuxième carter, les premier et deuxième carters pouvant être destinés à se fixer l'un sur l'autre ou l'un par rapport à l'autre, le bac de distribution pouvant être maintenu en position au sein de la boîte de vitesses par coincement entre le premier carter et le deuxième carter.

L'invention porte encore sur un groupe motopropulseur pour véhicule, notamment pour véhicule automobile, le groupe motopropulseur comprenant une boîte de vitesses telle que définie précédemment.

L'invention porte encore sur un véhicule, notamment un véhicule automobile, comprenant un groupe motopropulseur tel que défini précédemment ou une boîte de vitesses telle que définie précédemment.

### Présentation des figures

Ces objets, caractéristiques et avantages de la présente invention seront exposés en détail dans la description suivante d'un mode de réalisation d'une boîte de vitesses faite à titre non-limitatif en relation avec les figures jointes parmi lesquelles :
La figure 1 est une vue schématique d'un véhicule automobile.
La figure 2 est une vue en perspective partielle d'une boîte de vitesses selon un mode de réalisation de l'invention.
La figure 3 est une autre vue en perspective partielle d'une boîte de vitesses selon un mode de réalisation de l'invention.
La figure 4 est une vue de dessus d'un bac de distribution d'huile selon un mode de réalisation de l'invention.
La figure 5 est une vue en coupe du bac de distribution d'huile selon le mode de réalisation de l'invention.
La figure 6 est une vue en perspective du bac de distribution d'huile selon le mode de réalisation de l'invention.
La figure 7 est une autre vue en perspective du bac de distribution d'huile selon le mode de réalisation de l'invention.
La figure 8 est une autre vue en perspective du bac de distribution d'huile selon le mode de réalisation de l'invention.
La figure 9 est une autre vue en perspective du bac de distribution d'huile selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

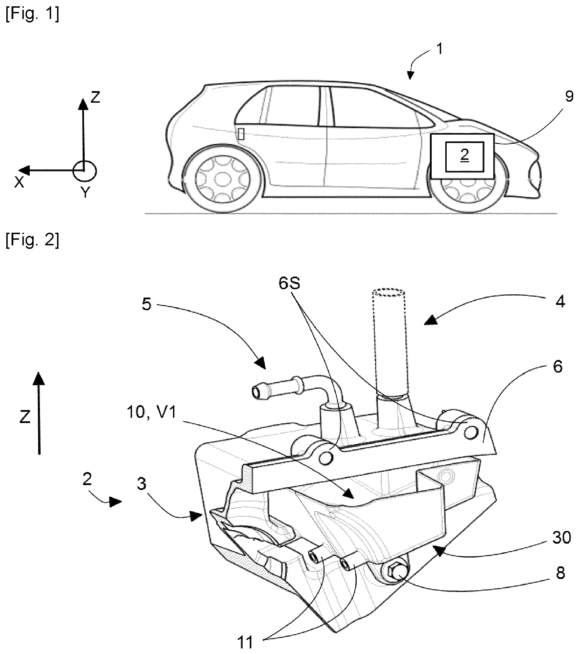

La figure 1 illustre schématiquement un véhicule 1, de préférence un véhicule automobile. Le véhicule 1 comprend un groupe motopropulseur 9. Le groupe moto propulseur 9 comprend par exemple un moteur électrique et/ou un moteur thermique. Le groupe motopropulseur 9 ou le véhicule 1 comprend une boîte de vitesses 2.

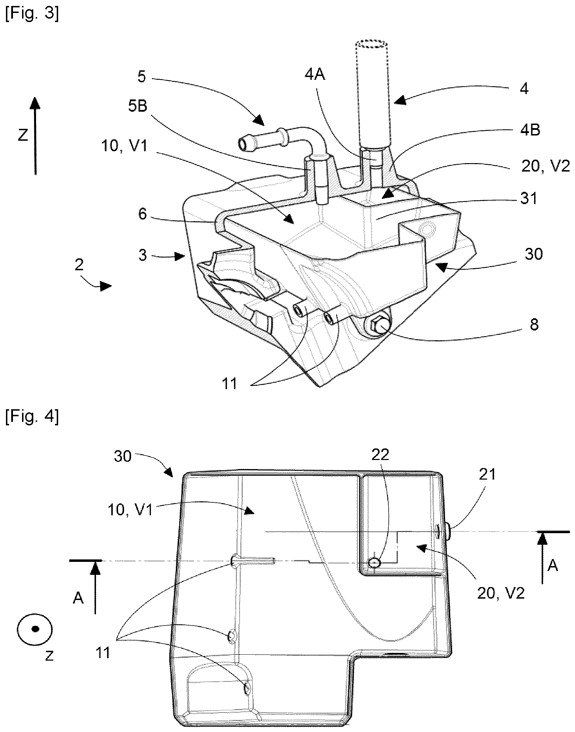

La boîte de vitesses 2 est lubrifiée par de l'huile. Comme illustré sur les figures 2 et 3 notamment, la boîte de vitesses 2 comprend une partie haute 3. Par « partie haute », on entend une zone s'étendant au niveau des points les plus haut selon la direction verticale Z de la boîte de vitesses, la boîte de vitesses étant implantée dans le véhicule stationné sur une surface sensiblement parallèle au plan XY.

La boîte de vitesses 2 comprend encore un bac de distribution 30 d'huile qui va être décrit par la suite. La boîte de vitesses 2 comprend encore un moyen d'injection 5 d'huile au niveau de la partie haute 3 de la boîte de vitesses 2. Le moyen d'injection 5 comprend par exemple un conduit, par exemple courbé de l'ordre de 90 degrés comme illustré sur les figures 2 et 3. Un tel conduit est de préférence adapté pour coopérer avec une durite (non illustrée) transportant l'huile provenant de la bâche, la durite s'étendant à l'extérieur de la boîte de vitesse et/ou à l'intérieur de la boîte de vitesses. Alternativement, la remontée d'huile circule au sein d'un conduit ménagé dans le ou les carters de la boîte de vitesses, par exemple usiné ou obtenu par fonderie. Avantageusement, une pompe (non illustrée), par exemple électrique, envoie de l'huile pompée ou récupérée dans la bâche vers le conduit 5. La boîte de vitesses 2 comprend de préférence un bossage 5B doté d'un alésage 5C pour recevoir le conduit 5, comme illustré sur la figure 3.

La boîte de vitesses 2 comprend encore un moyen de mise à l'air 4 au niveau de la partie haute 3. Le moyen de mise à l'air 4 comprend par exemple un conduit rigide, ou une durite, appelée généralement « reniflard ». Quoi qu'il en soit le moyen de mise à l'air est creux pour qu'il assure sa fonction d'alimenter en air l'intérieur de la boîte de vitesses ou d'évacuer de l'air depuis l'intérieur de la boîte de vitesses selon les conditions de fonctionnement. La boîte de vitesses 2 comprend de préférence un bossage 4B doté d'un alésage 4C pour recevoir le conduit 4, comme illustré sur la figure 3. De préférence, un embout fretté 4A est inséré dans l'alésage et le reniflard se branche, se connecte, sur l'embout 4A de manière étanche.

Alternativement, un seul bossage est prévu et comprend deux trous ou alésages, c'est-à-dire un premier trou pour l'arrivée d'huile et un deuxième trou pour la mise à l'air (mode de réalisation non illustré).

Comme illustré sur les figures 2 et 3, le bac de distribution 30 d'huile est agencé au niveau de la partie haute 3 de la boîte de vitesses 2.

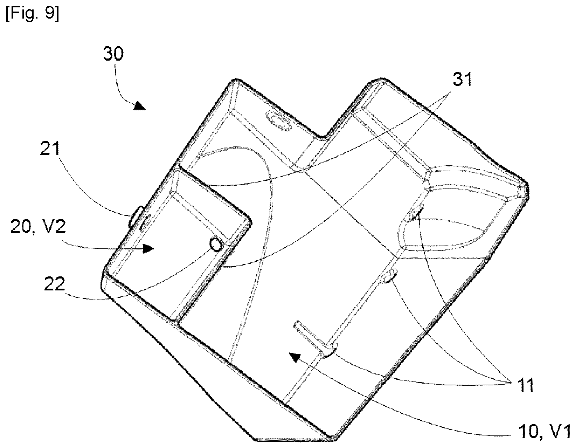

Plus précisément, le bac de distribution 30 comprend une première chambre ou compartiment ou cavité 10. La première chambre 10 comprend, définit, un premier volume V1. La première chambre 10 comprend au moins une évacuation 11 pour permettre l'écoulement de l'huile depuis la première chambre 10 vers des éléments de la boîte de vitesses qui ont besoin d'huile et qui ne reçoivent pas ou peu d'huile projetée par barbotage. Autrement dit, la première chambre 10 reçoit de l'huile et la distribue via l'au moins une évacuation 11. Comme illustré sur les figures 2 à 9, trois évacuations 11 sont prévues dans la première chambre 10 dans le mode de réalisation illustré. Une seule évacuation, deux évacuations, ou plus de trois évacuations peuvent être prévues dans la première chambre. Il convient d'adapter le nombre d'évacuation et leurs emplacements dans la première chambre selon les éléments et/ou les zones de la boîte de vitesses nécessitant de l'huile pour assurer leur lubrification. Avantageusement, la ou les évacuations 11 sont agencées au niveau des points les plus bas selon la direction verticale Z du volume V1 de sorte à permettre de distribuer l'intégralité de l'huile se trouvant dans la première chambre 10. Cette distribution d'huile se fait par gravité.

Le bac de distribution 30 comprend une deuxième chambre ou compartiment ou cavité 20. La deuxième chambre 20 comprend, définit, un deuxième volume V2. La deuxième chambre 20 est destinée à communiquer avec le moyen de mise à l'air 4 de la boîte de vitesses 2. La deuxième chambre 20 comprend un orifice d'admission 21 d'air. Ainsi, la deuxième chambre 20 comprend une arrivée d'air depuis l'intérieur de la boîte de vitesses 2 vers la deuxième chambre 20. Comme illustré sur les figures 4, 5, 7, 8, et 9, la deuxième chambre 20 comprend encore un orifice de vidage 22 pour l'huile. Ainsi, en cas d'huile se retrouvant dans la deuxième chambre 20, celle-ci est évacuée par l'orifice de vidage 22.

Le bac de distribution 30 comprend encore une cloison 31 séparant le premier volume V1 (volume de la première chambre 10) du deuxième volume V2 (volume de la deuxième chambre 20). Autrement dit, la première chambre 10 destinée à la distribution d'huile est séparée de la deuxième chambre 20 destinée à admettre ou à refouler de l'air.

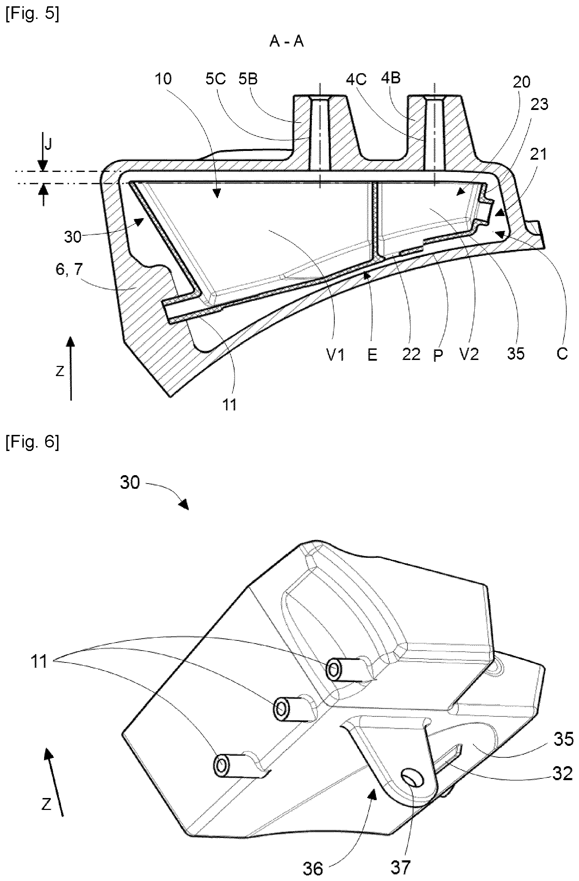

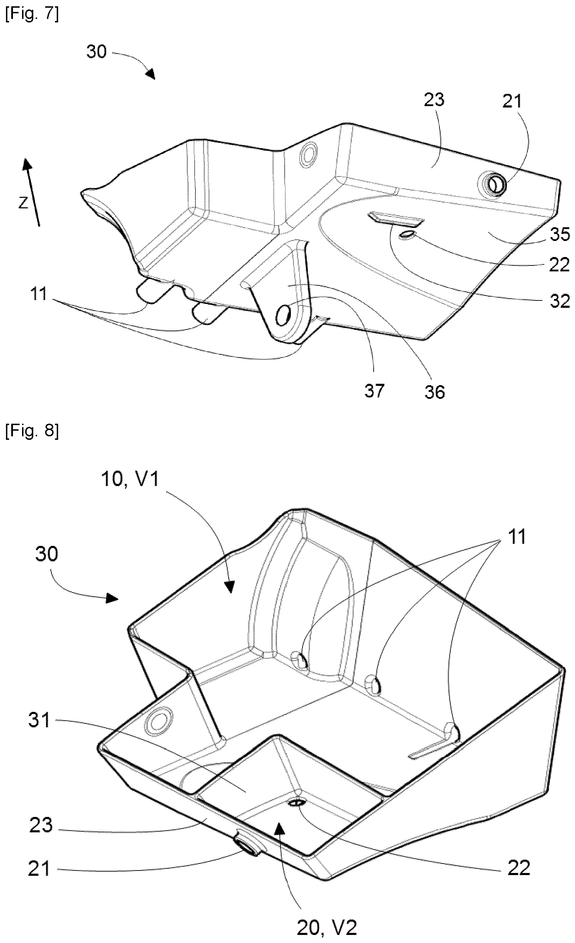

De préférence, comme illustré sur les figures 6 et 7, le bac de distribution 30 comprend un moyen d'écartement 32. Par exemple le moyen d'écartement 32 est une nervure, une protubérance, une saillie s'étendant depuis une surface externe inférieure 35 du bac de distribution. Ainsi, de préférence, le moyen d'écartement 32 est agencé sous la première chambre 10, par exemple à proximité du trou de vidage 22. Alternativement, le moyen d'écartement est agencé sous la deuxième chambre 20. Alternativement encore, le moyen d'écartement est agencé au niveau de la cloison 31 s'étendant entre les deux chambres, autrement dit sous la première chambre 10 et sous la deuxième chambre 20. Grâce au moyen d'écartement 32, un espace E subsiste entre la surface externe inférieure 35 du bac de distribution et une paroi ou peau interne P d'un carter ou des carters 6, 7 de la boîte de vitesses (voir figure 5). Ainsi, l'huile évacuée de l'orifice de vidage 22 de la deuxième chambre 20 retourne à la bâche en ruisselant sur la paroi P d'un carter ou des carters 6, 7. Sur la figure 2 notamment, seul le carter 6 est représenté.

De préférence, le bac de distribution 30 est obtenu en matière plastique, par exemple par moulage. Alternativement, le bac de distribution 30 est obtenu en matériau composite. Alternativement, le bac de distribution 30 comprend à la fois de la matière plastique et un matériau composite. Par exemple, le bac de distribution est obtenu par impression 3D ou par un procédé similaire.

En termes d'agencement au sein de la boîte de vitesses, comme illustré sur la figure 3, le bac de distribution 30 est disposé pour que la première chambre 10 soit en vis-à-vis du bossage 5B recevant le moyen d'injection 5 et que la deuxième chambre 20 soit en vis-à-vis du bossage 4B recevant le moyen de mise à l'air 4.

De préférence, comme illustré sur les figures 3, 4, 5, 8 et 9, la forme du bac de distribution 30 est telle que la première chambre 10 et la deuxième chambre 20 sont intégralement ouvertes vers le haut.

Alternativement, la première chambre et/ou la deuxième chambre est partiellement ouverte vers le haut. Par exemple, une ouverture en haut de la première chambre 10 est ménagée en vis-à-vis du moyen de mise à l'air 4 et une ouverture en haut de la deuxième chambre 20 est ménagée en vis-à-vis du moyen d'injection d'huile 5 (mode de réalisation non illustré).

De préférence, la boîte de vitesses 2 comprend un premier carter 6 et un deuxième carter 7. Les premier et deuxième carters 6, 7 se fixent l'un sur l'autre, ou l'un par rapport à l'autre. Par exemple les carters sont maintenus par des vis ou goujons coopérant avec des écrous, ou des boulons, ou des taraudages coopérant avec des vis, notamment au niveau de surépaisseurs 6S du carter 6 illustrées sur la figure 2.

Par exemple, comme illustré sur la figure 2, le bac de distribution 30 est fixé sur le premier carter 6 par l'intermédiaire d'une vis 8. Par exemple un taraudage ménagé dans le carter 6 permet de visser la vis 8 dans le carter 6. Dans ce cas, comme illustré sur les figures 6 et 7, le bac de distribution 30 comprend une oreille ou patte de fixation 36 dans laquelle est ménagée un trou ou alésage 37 destiné au passage de la vis 8.

Alternativement, la fixation du bac de distribution est prévue sur le deuxième carter 7, ou, éventuellement sur les deux carters. Par exemple, au moins un pion de centrage et/ou au moins un pion de maintien s'étend depuis le bac de distribution alors que des orifices dans au moins un carter sont prévus pour recevoir ce ou ces pions. Par exemple un pion de maintien est en forme de sapin, c'est-à-dire de forme générale conique de sorte à faciliter son insertion tout en rendant difficile son extraction.

Alternativement, le bac de distribution 30 est maintenu en position au sein de la boîte de vitesses 2 par coincement, blocage, pincement, encapsulage, entre le premier carter 6 et le deuxième carter 7. Par exemple, en complément, le bac de distribution comprend une ou plusieurs languettes déformables destinées à se plier lors de la fermeture ou chapeautage des deux carters l'un par rapport à l'autre de sorte à éviter tout déplacement du bac de distribution ultérieur au sein de la boîte de vitesses.

A noter que la fonction de mise à l'air est maximisée par la présence du trou 21 ménagé dans une paroi 23 de la deuxième chambre 20 (voir figures 5, 7 et 8). Le trou 21 débouche dans une cavité supérieure C de la boîte de vitesses. Ainsi, le deuxième volume V2 peut rapidement se vider ou se remplir d'air suivant les besoins internes de la boîte de vitesses. De préférence le bac 30 vient au contact en haut de la boîte de vitesse de sorte que le jeu J (figure 5) soit nul ou sensiblement nul. Pour rappel, de préférence, le volume V1 (récupération d'huile) et le volume V2 (zone calme) du bac de distribution 30 sont ouverts vers le haut de sorte que l'huile tombe dans le premier volume V1 depuis le moyen d'injection d'huile 5 et de sorte que le moyen de mise à l'air 4 communique directement avec le volume V2.

Comme évoqué ci-dessus, on ne prévoit pas de jeu J, ou bien un jeu minime, entre le haut du bac de distribution et le carter de sorte à empêcher l'huile d'accéder au sein de la deuxième chambre 20. En effet, de préférence, la deuxième chambre 20 ne reçoit pas d'huile. Le cas échéant, le trou de vidage 22 permet une évacuation rapide de celle-ci, sous l'effet de la gravité. Ainsi, de préférence, l'orifice de vidage 22 est agencé au niveau des points les plus bas de la deuxième chambre 20. Cet orifice de vidage 22 associé au moyen d'écartement 32 assure l'évacuation d'huile arrivée « accidentellement » dans le deuxième volume V2. Autrement dit, le trou 22 assure qu'aucun ruissellement ou débordement d'huile ne puisse venir perturber la fonction de la zone calme. Pour rappel, la zone calme vise à assurer la communication entre l'intérieur de la boîte de vitesses et le milieu extérieur afin d'obtenir une pression interne similaire à la pression atmosphérique.

Grâce à la solution, la deuxième chambre 20 offre le deuxième volume V2 comme volume minimum de mise à l'air. Autrement dit, le volume d'air au sein du deuxième volume et au sein du conduit 4 est immédiatement disponible en cas de début de dépression au sein de la boîte de vitesses. L'équilibre de la pression est immédiatement atteint ce qui empêche toute dépression au sein de la boîte de vitesses. Autrement dit, la mise à l'air est optimale, la pression demeure constante au sein de la boîte de vitesses. Les lèvres des joints ou bagues ne subissent pas de variation de pression ce qui permet d'éviter leur dégradation. Ainsi, lors du fonctionnement qui entraîne un échauffement au sein de la boîte de vitesses, les gaz peuvent sortir ce qui évite toute surpression néfaste à la tenue des joints ou bagues à lèvres. De même, lors d'un refroidissement (passage de gué par exemple, ou arrêt du moteur thermique), l'air peut entrer ce qui évite une dépression au sein de la boîte de vitesses. La fonction de mise à l'air qui vise à maintenir la boite de vitesses à la pression atmosphérique durant toutes les phases de fonctionnement est optimale.

Grâce à la solution, un simple bossage 4B permet de venir brancher, relier, un conduit ou tuyau, c'est-à-dire un reniflard, sans recourir à des usinages et/ou rainures et/ou nervures complexes et coûteuses au sein de la boîte de vitesses pour empêcher l'arrivée de projection d'huile dans le reniflard ou à proximité de son orifice au niveau de la boîte de vitesses.

La solution permet de combiner deux types de lubrification : d'une part la lubrification de la boîte de vitesses par barbotage et d'autre part la lubrification par ruissellement ou écoulement, sous le simple effet de la gravité, via les évacuation ou orifices 11 ménagés dans le bac 30. Pour rappel, le barbotage se fait par exemple via la rotation de la couronne de différentiel qui remonte l'huile depuis la nappe en bas de boîte et la projette vers les composants à lubrifier, principalement les roulements. Pour rappel, l'huile arrivant dans la première chambre 10 via le moyen d'injection 5, est remontée par le biais d'une pompe depuis la bâche ou nappe présente en fond de boîte de vitesses.

A noter que la lubrification par distribution ou ruissellement, remontée par une pompe, est particulièrement adaptée aux transmissions hybrides qui recourent à des machines électriques impliquant par exemple des paliers éloignés de la couronne de différentiel. En outre de tels paliers sont soumis à des vitesses de rotations très élevées, par exemple de l'ordre de 15000 tr/min, ce qui requiert un apport en huile important. Les évacuations 11 de la première chambre 10 permettent d'alimenter, par exemple en partie haute, c'est-à-dire dans des zones inaccessibles par barbotage et projections. L'huile se déverse précisément via le bac ou goulotte 30 de récupération par l'intermédiaire de perçages et/ou becs verseurs et/ou rampes et/ou gouttières et/ou goulottes 11 aux endroits nécessitant une lubrification et ne pouvant pas être atteints par barbotage. Ces évacuations 11 sont avantageusement orientées de sorte à diriger le flux d'huile précisément vers les composants. Autrement dit, l'huile relevée par la pompe est réintroduite dans la boîte de vitesses via un piquage 5 sur le carter, au plus près de la zone ciblée pour la lubrification.

La solution permet d'implanter la fonction d'apport d'huile additionnel à la lubrification par barbotage à proximité immédiate de la fonction de mise à l'air libre. A noter que la mise à l'air libre est implantée de préférence dans une zone calme de la boîte de vitesses. La solution est en outre compatible avec les architectures les plus complexes des boites de vitesses, à savoir comprenant des capteurs, des actionneurs, des lignes d'arbres dédiées à des machines électriques. En effet, dans ces architectures complexes, il devient difficile d'implanter des nervures dans le ou les carters pour former une zone calme, c'est-à-dire une zone à l'abri des projections d'huile. La solution de goulotte multifonction 30 regroupant les fonctions de récupération/redistribution d'huile et de mise à l'air libre de la boîte de vitesse peut toutefois être implanté dans de telles architectures complexes.

Comme évoqué précédemment, le bac de distribution ou goulotte 30 est avantageusement fixé de manière fiable et durable par rapport à un carter ou aux carters de la boîte de vitesse, notamment une fois celle-ci assemblée. Ainsi, tout risque de dégagement ou de déplacement du bac par rapport à la boîte de vitesses est écarté.

En résumé, le bac de distribution permet de regrouper deux fonctions différentes et aux besoins opposés en une seule et même pièce. Ce regroupement est assuré dans une même zone et dans un espace particulièrement réduit. Comme évoqué précédemment, on remplace ainsi la création, dans la fonderie d'un carter, d'une zone calme très complexe à mettre en œuvre dans le moule et qui s'avère onéreuse à concevoir et fabriquer. En outre, on supprime d'éventuels usinages pour l'obtention de nervures de sorte à créer la zone calme. A noter que ces usinages sont éventuellement réalisés dans la même phase que le surfaçage d'une face d'accouplement ce qui génère des vibrations impactant la planéité de la face d'accouplement. Ainsi, de tels problèmes d'usinage sont écartés.

Le bac de distribution assure à lui seul la récupération d'huile, via un écoulement externe, la redistribution de cette huile vers des composants par gravité, et la création d'une zone calme interne à la boîte de vitesse, à l'abri des projections d'huile, en vis-à-vis d'un dispositif externe de mise à l'air libre. Le bac étant particulièrement peu encombrant, les fonctions sont regroupées au sein d'une zone commune particulièrement réduite ce qui facilite son implantation dans une boîte de vitesses ayant une architecture complexe, par exemple comprenant une machine électrique. De préférence, l'implantation du bac de distribution se fait en partie haute de sorte à respecter le principe d'écoulement gravitaire de l'huile. Enfin, en cas d'obtention en plastique notamment, le bac de distribution permet d'assurer ces fonctions aisément et à moindre coût.

Un barbotage des organes de boîte de vitesse connue de l'art antérieur ne projette pas de l'huile vers tous les éléments à lubrifier. Ainsi, on remonte de l'huile depuis une bâche de la boîte de vitesse jusqu'à un point haut d'une telle boîte de vitesses, généralement via une pompe aspirant l'huile au niveau d'une telle bâche. Grâce à la solution selon l'invention, on réalise un moyen d'écoulement de l'huile ainsi remontée qui est agencé pour distribuer cette huile vers des éléments nécessitant une lubrification qui ne seraient sinon pas atteints par l'huile issue du barbotage.

En remarque, la solution atteint donc l'objectif recherché de simplifier la fabrication de la mise à l'air d'un carter de boîte de vitesses et présente les avantages suivants :
- elle peut être utilisée dans des boîtes de vitesses destinées à d'autres types de véhicule, tels que des engins agricoles, des engins de chantier, des bateaux, ou d'autres équipements, tels que des groupes électrogènes, ou des pompes par exemple.
- la forme du bac de distribution peut être adaptée aisément à la configuration interne de tout type de boîte de vitesses, notamment du fait de sa matière qui permet d'obtenir des formes complexes.

## Revendications

1. Boîte de vitesses (2) lubrifiée par de l'huile, la boîte de vitesses (2) comprenant une partie haute (3), comprenant :
- un moyen d'injection (5) d'huile au niveau de la partie haute (3) de la boîte de vitesses (2),
- un moyen de mise à l'air (4) au niveau de la partie haute (3) de la boîte de vitesses (2),
- un bac de distribution (30) d'huile agencé en partie haute (3) au sein de la boîte de vitesses (2), le bac de distribution (30) comprenant une première chambre (10) comprenant au moins une évacuation (11) de distribution d'huile, la première chambre (10) étant destinée à recevoir de l'huile et à la redistribuer en s'échappant de la première chambre (10) par l'au moins une évacuation (11), une deuxième chambre (20) destinée à communiquer avec le moyen de mise à l'air (4) de la boîte de vitesses (2),
le bac de distribution (30) étant agencé de sorte que la première chambre (10) soit en vis-à-vis du moyen d'injection (5) et de sorte que la deuxième chambre (20) soit en vis-à-vis du moyen de mise à l'air (4).

2. Boîte de vitesses (2) selon la revendication précédente, **caractérisé en ce que** le bac de distribution (30) comprend une cloison (31) séparant un premier volume (V1) de la première chambre (10) d'un deuxième volume (V2) de la deuxième chambre (20) de sorte à séparer la première chambre (10) destinée à la distribution d'huile de la deuxième chambre (20) destinée à admettre ou à refouler de l'air.

3. Boîte de vitesses (2) selon l'une des revendications précédentes, **caractérisé en ce que** la deuxième chambre (20) comprend un orifice d'admission (21) d'air destiné à permettre une arrivée d'air depuis l'intérieur de la boîte de vitesses (2) vers la deuxième chambre (20).

4. Boîte de vitesses (2) selon l'une des revendications précédentes, **caractérisé en ce que** la deuxième chambre (20) comprend un orifice de vidage (22) d'huile destiné à évacuer toute huile présente dans la deuxième chambre (20).

5. Boîte de vitesses (2) selon l'une des revendications précédentes, **caractérisé en ce que** le bac de distribution (30) est obtenu en matière plastique et/ou en matériau composite.

6. Boîte de vitesses (2) selon l'une des revendications 1, 2, 3 ou 5 en combinaison avec la revendication 4, **caractérisée en ce que** le bac de distribution (30) comprend un moyen d'écartement (32), notamment une nervure, sous la première chambre (10) et/ou sous la deuxième chambre (20) de sorte à laisser un espace (E) pour l'évacuation de l'huile depuis l'orifice de vidage (22) de la deuxième chambre (20).

7. Boîte de vitesses (2) selon l'une des revendications précédentes, **caractérisée en ce que** la première chambre (10) et/ou la deuxième chambre (20) du bac de distribution (30) est intégralement ouverte vers le haut.

8. Boîte de vitesses (2) selon l'une des revendications précédentes, la boîte de vitesses (2) comprenant un premier carter (6) et un deuxième carter (7), les premier et deuxième carters (6, 7) étant fixés l'un sur l'autre ou l'un par rapport à l'autre, **caractérisée en ce que** le bac de distribution (30) est fixé sur le premier carter (6) et/ou sur le deuxième carter (7), notamment par l'intermédiaire d'une vis (8) et/ou d'un pion de centrage et/ou d'un pion de maintien.

9. Boîte de vitesses (2) selon l'une des revendications 1 à 7, la boîte de vitesses (2) comprenant un premier carter (6) et un deuxième carter (7), les premier et deuxième carters (6, 7) étant fixés l'un sur l'autre ou l'un par rapport à l'autre, **caractérisée en ce que** le bac de distribution (30) est maintenu en position au sein de la boîte de vitesses (2) par coincement entre le premier carter (6) et le deuxième carter (7).

10. Groupe motopropulseur (9) pour véhicule, notamment pour véhicule automobile, **caractérisé en ce que** le groupe motopropulseur (9) comprend une boîte de vitesses (2) selon l'une des revendications précédentes.

11. Véhicule, notamment véhicule automobile (1), **caractérisé en ce qu'**il comprend un groupe motopropulseur (9) selon la revendication précédente ou une boîte de vitesses (2) selon l'une des revendications 1 à 9.

## Patentansprüche

1. Getriebe (2), das mit Öl geschmiert ist, wobei das Getriebe (2) einen oberen Teil (3) umfasst, der Folgendes umfasst:
- ein Mittel zum Einspritzen (5) von Öl am oberen Teil (3) des Getriebes (2),
- ein Entlüftungsmittel (4) am oberen Teil (3) des Getriebes (2),
- eine Ölverteilungswanne (30), die im oberen Teil (3) des Getriebes (2) angeordnet ist, wobei die Verteilungswanne (30) eine erste Kammer (10) mit mindestens einem Ölverteilungsauslass (11) umfasst, wobei die erste Kammer (10) dazu bestimmt ist, Öl aufzunehmen und es durch den mindestens einen Auslass (11) aus der ersten Kammer (10) zu verteilen, eine zweite Kammer (20), die dazu bestimmt ist, mit dem Entlüftungsmittel (4) des Getriebes (2) zu kommunizieren,
die Verteilungswanne (30) so angeordnet ist, dass die erste Kammer (10) dem Einspritzmittel (5) gegenüberliegt und die zweite Kammer (20) dem Entlüftungsmittel (4) gegenüberliegt.

2. Getriebe (2) nach dem vorhergehenden Anspruch, **dadurch gekennzeichnet, dass** die Verteilungswanne (30) eine Trennwand (31) umfasst, die ein erstes Volumen (V1) der ersten Kammer (10) von einem zweiten Volumen (V2) der zweiten Kammer (20) trennt, um die erste Kammer (10), die für die Ölverteilung bestimmt ist, von der zweiten Kammer (20) zu trennen, die für das Einlassen oder Fördern von Luft bestimmt ist.

3. Getriebe (2) nach einem der vorhergehenden Ansprüche, **dadurch gekennzeichnet, dass** die zweite Kammer (20) eine Lufteinlassöffnung (21) umfasst, die eine Luftzufuhr aus dem Inneren des Getriebes (2) in die zweite Kammer (20) ermöglicht.

4. Getriebe (2) nach einem der vorhergehenden Ansprüche, **dadurch gekennzeichnet, dass** die zweite Kammer (20) eine Ölablassöffnung (22) aufweist, die dazu dient, jegliches in der zweiten Kammer (20) vorhandenes Öl abzulassen.

5. Getriebe (2) nach einem der vorhergehenden Ansprüche, **dadurch gekennzeichnet, dass** die Verteilungswanne (30) aus Kunststoff und/oder Verbundwerkstoff hergestellt ist.

6. Getriebe (2) nach einem der Ansprüche 1, 2, 3 oder 5 in Verbindung mit Anspruch 4, **dadurch gekennzeichnet, dass** die Verteilungswanne (30) ein Abstandsmittel (32), insbesondere eine Rippe, unter der ersten Kammer (10) und/oder unter der zweiten Kammer (20) umfasst, um einen Raum (E) für das Ablassen des Öls aus der Ablassöffnung (22) der zweiten Kammer (20) zu lassen.

7. Getriebe (2) nach einem der vorhergehenden Ansprüche, **dadurch gekennzeichnet, dass** die erste Kammer (10) und/oder die zweite Kammer (20) der Verteilungswanne (30) nach oben hin vollständig offen ist.

8. Getriebe (2) nach einem der vorhergehenden Ansprüche, wobei das Getriebe (2) ein erstes Gehäuse (6) und ein zweites Gehäuse (7) umfasst, wobei das erste und das zweite Gehäuse (6, 7) aneinander oder relativ zueinander befestigt sind, **dadurch gekennzeichnet, dass** die Verteilungswanne (30) am ersten Gehäuse (6) und/oder am zweiten Gehäuse (7) insbesondere mittels einer Schraube (8) und/oder eines Zentrierstifts und/oder eines Haltestift befestigt ist.

9. Getriebe (2) nach einem der Ansprüche 1 bis 7, wobei das Getriebe (2) ein erstes Gehäuse (6) und ein zweites Gehäuse (7) umfasst, wobei das erste und das zweite Gehäuse (6, 7) aneinander oder relativ zueinander befestigt sind, **dadurch gekennzeichnet, dass** die Verteilungswanne (30) durch Einklemmen zwischen dem ersten Gehäuse (6) und dem zweiten Gehäuse (7) in Position innerhalb des Getriebes (2) gehalten wird.

10. Antriebsstrang (9) für ein Fahrzeug, insbesondere für ein Kraftfahrzeug, **dadurch gekennzeichnet, dass** der Antriebsstrang (9) ein Getriebe (2) nach einem der vorhergehenden Ansprüche umfasst.

11. Fahrzeug, insbesondere Kraftfahrzeug (1), **dadurch gekennzeichnet, dass** es einen Antriebsstrang (9) nach dem vorhergehenden Anspruch oder ein Getriebe (2) nach einem der Ansprüche 1 bis 9 umfasst.

## Claims

1. Oil-lubricated gearbox (2), the gearbox (2) having an upper portion (3) and comprising:
- oil injection means (5) at the upper portion (3) of the gearbox (2);
- venting means (4) at the upper portion (3) of the gearbox (2); and
- an oil distribution tray (30) arranged in the upper portion (3) within the gearbox (2), the distribution tray (30) comprising a first chamber (10) having at least one oil distribution outlet (11), the first chamber (10) being intended to receive the oil and redistribute it by flowing out of the first chamber (10) through the at least one outlet (11), and a second chamber (20) intended to communicate with the venting means (4) of the gearbox (2),
wherein the distribution tray (30) is arranged such that the first chamber (10) faces the oil injection means (5) and the second chamber (20) faces the venting means (4).

2. Gearbox (2) according to the preceding claim, **characterised in that** the distribution tray (30) comprises a partition (31) separating a first volume (V1) of the first chamber (10) from a second volume (V2) of the second chamber (20), so as to separate the first chamber (10), intended for oil distribution, from the second chamber (20), intended to admit or discharge air.

3. Gearbox (2) according to any one of the preceding claims, **characterised in that** the second chamber (20) comprises an air inlet opening (21) intended to allow air to enter the second chamber (20) from within the gearbox (2).

4. Gearbox (2) according to any one of the preceding claims, **characterised in that** the second chamber (20) comprises an oil drain opening (22) intended to drain any oil present in the second chamber (20).

5. Gearbox (2) according to any one of the preceding claims, **characterised in that** the distribution tray (30) is made of plastic material and/or composite material.

6. Gearbox (2) according to any one of claims 1, 2, 3 or 5 in combination with claim 4, **characterised in that** the distribution tray (30) comprises a spacing member (32), in particular a rib, beneath the first chamber (10) and/or beneath the second chamber (20), so as to leave a space (E) for draining oil from the oil drain opening (22) of the second chamber (20).

7. Gearbox (2) according to any one of the preceding claims, **characterised in that** the first chamber (10) and/or the second chamber (20) of the distribution tray (30) is entirely open at the top.

8. Gearbox (2) according to any one of the preceding claims, the gearbox (2) comprising a first casing (6) and a second casing (7), the first and second casings (6, 7) being fixed one on the other or relative to one another, **characterised in that** the distribution tray (30) is fixed to the first casing (6) and/or to the second casing (7), in particular by means of a screw (8) and/or a centring pin and/or a retaining pin.

9. Gearbox (2) according to any one of claims 1 to 7, the gearbox (2) comprising a first casing (6) and a second casing (7), the first and second casings (6, 7) being fixed one on the other or relative to one another, **characterised in that** the distribution tray (30) is held in position within the gearbox (2) by being clamped between the first casing (6) and the second casing (7).

10. Powertrain (9) for a vehicle, in particular for a motor vehicle, **characterised in that** the powertrain (9) comprises a gearbox (2) according to any one of the preceding claims.

11. A vehicle, in particular a motor vehicle (1), **characterised in that** it comprises a powertrain (9) according to the preceding claim or a gearbox (2) according to any one of claims 1 to 9.
